(19)

Europäisches
Patentamt

European
Patent Office

Office européen
des brevets

(11)  **EP 4 618 007 A1**

(12)  **EUROPÄISCHE PATENTANMELDUNG**

(43) Veröffentlichungstag:
**17.09.2025   Patentblatt 2025/38**

(21) Anmeldenummer: **24163663.8**

(22) Anmeldetag: **14.03.2024**

(51) Internationale Patentklassifikation (IPC):
***G06T 7/00*** *(2017.01)*

(52) Gemeinsame Patentklassifikation (CPC):
**G06T 7/0004;** G06T 2207/10016;
G06T 2207/10152; G06T 2207/20081;
G06T 2207/20084; G06T 2207/30164

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Henkel AG & Co. KGaA
40589 Düsseldorf (DE)**

(72) Erfinder:
• **MAIER, Maximilian
40223 Düsseldorf (DE)**

• **WALOCH, Christoph
40764 Langenfeld (DE)**
• **DALLE, Victorien
1000 Brüssel (BE)**
• **SCHWARZ, Lynn
41464 Neuss (DE)**
• **HARTMANN, Peter
41812 Erkelenz (DE)**

(74) Vertreter: **Viering, Jentschura & Partner mbB
Patent- und Rechtsanwälte
Am Brauhaus 8
01099 Dresden (DE)**

(54)  **VERFAHREN ZUR ERMITTLUNG ERFORDERLICHER REPARATURMASSNAHMEN**

(57)    Gemäß wird ein Verfahren zur Bildverarbeitung beschrieben, wobei das Verfahren das Ermitteln eines Objekts in einem jeden digitalen Bild von mehreren digitalen Bildern, die das Objekt enthalten, wobei die mehreren digitalen Bilder das Objekt unter unterschiedlichen Winkeln und/oder bei unterschiedlichen Lichtverhältnissen erfassen, das Ermitteln von einem oder mehreren Merkmalen für das ermittelte Objekt und das Ermitteln, unter Verwendung des oder der ermittelten einem oder mehreren Merkmale und mittels eines Maschinen-Lern-Modells, ob für das Objekt eine Reparaturmaßnahme erforderlich ist und gegebenenfalls welche Reparaturmaßnahme erforderlich ist aufweist, wobei für die ermittelte Reparaturmaßnahme zusätzlich ein oder mehrere im Rahmen der ermittelten Reparaturmaßnahme einzusetzende Haftmittel aus einem Satz mehrerer vorgegebener und gespeicherter Haftmittel ermittelt werden.

FIG 6

Ermittlung eines Objektes in einem jeden digitalen Bild von mehreren digitalen Bilder — 601

Ermittlung ein oder mehrerer Objektmerkmale für das ermittelte Objekt — 602

Ermittlung ob für das Objekt eine Reparaturmaßnahme erforderlich ist, gegebenenfalls welche Reparaturmaßnahme erforderlich ist, und Ermittlung von einen oder mehreren im Rahmen der ermittelten Reparaturmaßnahme einzusetzende Haftmittel — 603

600

EP 4 618 007 A1

## Beschreibung

Verschiedene Ausführungsbeispiele betreffen ein Verfahren zur Bildverarbeitung eines in einem oder mehreren digitalen Bildern erfassten Objekts.

Mithilfe von smarten Geräten, wie zum Beispiel Smartphones oder Mixed-Reality-Brillen, ist es heutzutage für Benutzer leicht möglich Bilder von ihrer Umgebung aufzunehmen. Falls sich ein Benutzer zum Beispiel in einer Wohnung befindet, werden auf den Bildern eine Vielzahl an verschiedenen Objekten zu sehen sein, wie z.B. Böden, Wände, Türen, Fenster, Möbelstücke, Sanitärobjekte, usw.

Es wäre wünschenswert anhand der aufgenommenen Umgebungsbilder zu ermitteln ob (und welche) Objekte in der Umgebung eines Benutzers reparaturbedürftig sind.

Des Weiteren wäre es wünschenswert den Benutzer bei der Reparatur der ein oder mehreren als reparaturbedürftig ermittelten Objekten zu helfen.

Ein Verfahren mit den Merkmalen des unabhängigen Anspruchs ermöglicht unter Verwendung eines Modells, beispielsweise eines Maschinen-Lern-Modells, zu ermitteln, ob für ein Objekt eine Reparaturmaßnahme erforderlich ist, welche Reparaturmaßnahme erforderlich ist, und zu ermitteln, welche Haftmittel aus einem Satz mehrerer vorgegebener und gespeicherter Haftmitteln (am besten) zu verwenden sind.

Erfindungsgemäß, weist ein Verfahren zur Bildverarbeitung auf:

Ermitteln eines Objekts in einem jeden digitalen Bild von mehreren digitalen Bildern, die das Objekt enthalten;

Ermitteln von einem oder mehreren Merkmalen für das ermittelte Objekt;

Ermitteln, unter Verwendung des oder der ermittelten einem oder mehreren Merkmale und mittels eines Modells, ob für das Objekt eine Reparaturmaßnahme erforderlich ist und gegebenenfalls welche Reparaturmaßnahme erforderlich ist, wobei für die ermittelte Reparaturmaßnahme zusätzlich ein oder mehrere im Rahmen der ermittelten Reparaturmaßnahme einzusetzende Haftmittel aus einem Satz mehrerer vorgegebener und gespeicherter Haftmittel ermittelt werden.

Die Erfindung stellt ein Verfahren zur Verfügung, mit dem die Eigenschaften von Oberflächen auf Objekten, die mit einem Klebstoff repariert werden sollen, identifiziert werden können, um einen geeigneten Klebstoff für die Durchführung einer Reparaturaufgabe zu bestimmen.

Beispielsweise, weist das Verfahren weiter auf:

Erfassen von mehreren digitalen Bildern, die das Objekt enthalten, wobei die mehreren digitalen Bilder das Objekt unter unterschiedlichen Winkeln und/oder bei unterschiedlichen Lichtverhältnissen erfassen.

Mehrere digitale Bilder, die aus verschiedenen Winkeln und bei unterschiedlichen Lichtverhältnissen aufgenommen wurden, liefern eine genauere Beschreibung der Strukturmerkmale der zu reparierenden Oberflächen. Bei der Verarbeitung von Digitalbildern, die aus verschiedenen Winkeln und unter verschiedenen Beleuchtungsbedingungen aufgenommen wurden, lassen sich einzelne Merkmale, insbesondere in Bezug auf die Porosität oder Rauheit der Oberflächen auf den Digitalbildern, noch besser erkennen.

Beispielsweise erfolgt das Ermitteln, ob für das Objekt eine Reparaturmaßnahme erforderlich ist und gegebenenfalls welche Reparaturmaßnahme erforderlich ist, mittels eines Maschinen-Lern-Modells.

Beispielsweise, weisen das oder die ermittelten Merkmale für das ermittelte Objekt mindestens eines der folgenden Merkmale auf oder bestehen das oder die ermittelten Merkmale für das ermittelte Objekt mindestens eines der folgenden Merkmale daraus:

eine oder mehrere Bruchlinien;

ein oder mehrere Materialien, aus denen das Objekt gebildet ist;

ein oder mehrere Bruchstücke des ermittelten Objekts;

eine Oberflächencharakterisierung von zumindest einem Teil einer Oberfläche des ermittelten Objekts oder Teils des ermittelten Objekts.

Beispielsweise wird für die ermittelte Reparaturmaßnahme eine Anleitung zum Durchführen der Reparaturmaßnahme ermittelt.

Beispielsweise weist die ermittelte Reparaturmaßnahme ein Zusammenfügen eines oder mehrerer Teile des Objekts mittels eines stoffschlüssigen Fügeverfahrens auf.

Beispielsweise weist die ermittelte Reparaturmaßnahme ein Zusammenfügen eines oder mehrerer Teile des Objekts mittels Klebens auf.

Beispielsweise weist das eine oder die mehreren im Rahmen der ermittelten Reparaturmaßnahme einzusetzende Haftmittel einen oder mehrere Klebstoffe auf.

Beispielsweise weist das Verfahren weiter auf:

Durchführen der Reparaturmaßnahme unter Verwendung des ermittelten Haftmittels.

Beispielsweise wird die Reparaturmaßnahme unter Einsatz von Augmented Reality durchgeführt.

Die Erfindung betrifft auch ein Computerlesbares Speichermedium, in dem Instruktionen gespeichert sind, die, wenn sie von einem Prozessor ausgeführt werden, ein Verfahren wie oben beschrieben implementieren.

Ausführungsbeispiele der Erfindung sind in den Figuren dargestellt und werden im Folgenden näher erläutert. In den Zeichnungen beziehen sich gleiche Bezugszeichen überall in den mehreren Ansichten allgemein auf dieselben Teile. Die Zeichnungen sind nicht notwendig maßstabsgerecht, wobei der Schwerpunkt stattdessen allgemein auf die Darstellung der Prinzipien der Erfindung liegt.

**Figur 1** zeigt ein Flussdiagramm, das ein Verfahren zur Objekterkennung veranschaulicht;

**Figur 2** zeigt ein Flussdiagramm, das ein Verfahren zur Bestimmung der Oberflächenporosität eines Objekts veranschaulicht;

**Figur 3** zeigt ein Flussdiagramm, das ein Verfahren veranschaulicht um sichtbare Schäden, Defekte oder Anomalien eines Objekts zu identifizieren;

**Figur 4** zeigt ein Flussdiagramm, das ein Verfahren gemäß verschiedenen Aspekten dieser Offenbarung zum Ermitteln einer erforderlichen Reparaturmaßnahme bei einem Riss veranschaulicht;

**Figur 5** zeigt Flussdiagramm, das ein Verfahren gemäß verschiedenen Aspekten dieser Offenbarung zum Ermitteln einer erforderlichen Reparaturmaßnahme bei einer Fraktur veranschaulicht;

**Figur 6** zeigt ein Flussdiagramm, das ein Verfahren zur Bildverarbeitung gemäß verschiedenen Aspekten dieser Offenbarung veranschaulicht; und

**Figur 7** zeigt eine Vorrichtung gemäß verschiedenen Aspekten dieser Offenbarung.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Bevor ermittelt werden kann ob für ein Objekt eine Reparaturmaßnahme erforderlich ist, beziehungsweise welche Reparaturmaßnahme notwendig ist und wie die Reparatur durchzuführen ist, muss das Objekt eindeutig erkannt und erfasst werden.

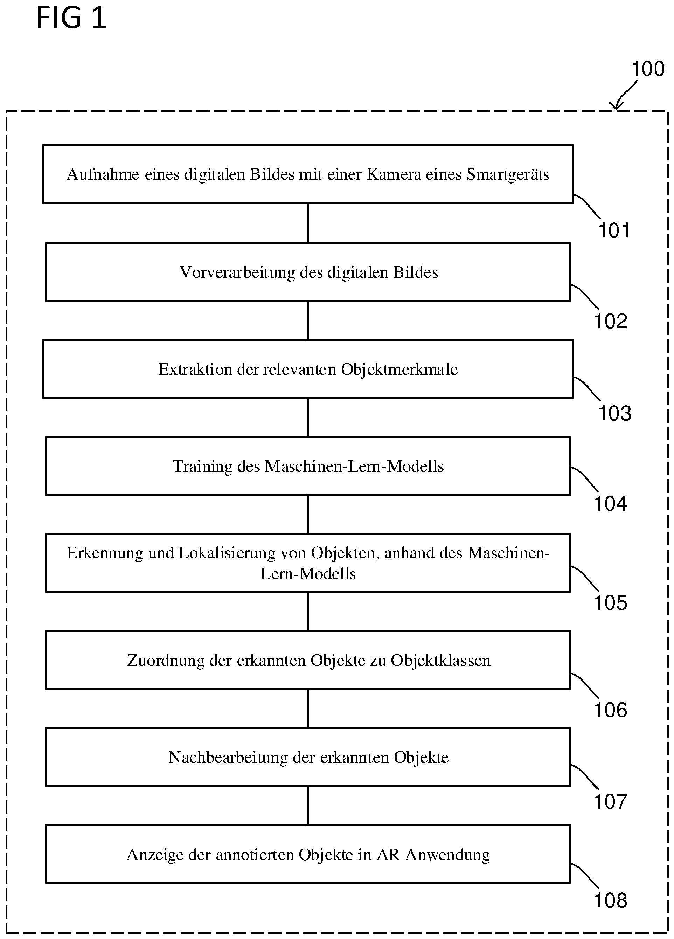

**Figur 1** zeigt ein Flussdiagramm 100, das ein Verfahren zur Objekterkennung in digitale Bilder veranschaulicht.

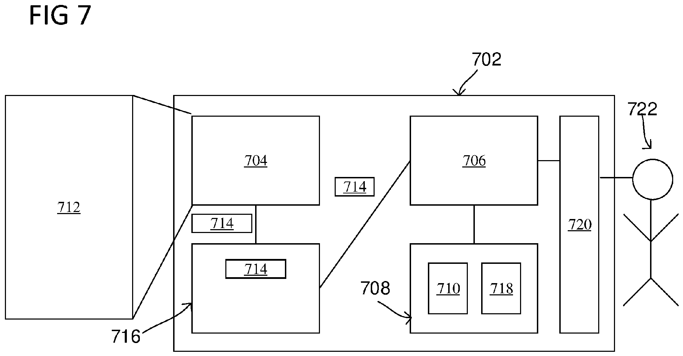

In dem Verfahren von Figur 1 (und auch in den anderen Verfahren dieser Beschreibung) kann ein Smartgerät vorgesehen sein (siehe beispielsweise tragbares Smartgerät 702 in **Figur 7),** z.B. ein Smartphone oder eine Mixed-Reality-Brille, das über (mindestens) eine Kamera 704, einen oder mehrere mit der Kamera 704 gekoppelten Prozessoren 706, einen mit dem oder den Prozessoren 706 gekoppelten Speicher 708 (allgemein ein computerlesbares Speichermedium), das geeignete Computerprogramme 710, anders ausgedrückt Software, für angereicherte Realität ("Augmented Reality", AR) verfügt. Ferner ist ein Bildspeicher 716 vorgesehen, der mit der Kamera 704 und mit dem Prozessor 706 gekoppelt ist.

In 101 wird eine Szene 812 mit der Kamera 704 des Smartgerätes 702 aufgenommen. Die Kamera 704 erzeugt eine zeitliche Folge von digitalen Bildern 714 und speichert diese in dem Bildspeicher 716. Zusätzlich zu der Folge von digitalen Bildern 714 können (falls vorhanden) Sensordaten von im Smartgerät 702 optional integrierten Sensoren, wie z.B. CCD-oder CMOS-Sensoren, ebenfalls verwendet werden zum Erzeugen von einer zeitlichen Folge von digitalen Bildern, die in dem Bildspeicher 716 gespeichert werden können.

In 102 wird ein in 101 aufgenommenes digitales (Roh)Bild der Folge von digitalen Bildern 714 mittels des oder der Prozessoren 706 aus dem Bildspeicher 716 ausgelesen und vorverarbeitet, um die Bildqualität zu verbessern und um Rauschen aus dem digitalen (Roh)Bild zu entfernen oder zumindest zu reduzieren, das die Objekterkennung beeinträchtigen könnte. Zur Vorverarbeitung gehört zum Beispiel Größenanpassung, Normalisierung und Rauschunterdrückung.

In 103, extrahiert oder extrahieren der oder die Prozessoren 706 ein oder mehrere relevante (Objekt-)Merkmale aus dem in 102 vorverarbeitetem Bild. Relevante (Objekt-)Merkmale können zum Beispiel Kanten, Farben, Texturen, bestimmte Formen oder (komplexe) Muster in dem vorverarbeiteten digitalen Bild sein.

In 104 trainiert oder trainieren der oder die Prozessoren 706 ein Modell 718 (das oder die Modelle 718 können in dem Speicher 710 oder in einem beliebigen anderen Speicher des Smartgeräts 702 oder auch extern von dem Smartgerät 702 gespeichert sein oder werden; bei einem externen Speicher wird/werden das/die Modelle von dem externen Speicher in das Smartgerät 702 geladen), beispielsweise ein adaptives Modell, beispielsweise ein Maschinen-Lern-Modell, so dass Zusammenhänge zwischen den in 103 extrahierten Merkmalen und einer Mehrzahl an verschiedenen (beispielsweise vorgegebenen oder vordefinierten) Objektklassen gelernt werden.

Das Modell kann mehrere (beliebig komplexe) Teilmodelle aufweisen. Als Modell für ein maschinelles Lernen kann ein Modell, das auf Bilderkennung und Bildklassifizierung spezialisiert (trainiert) ist, verwendet werden, beispielsweise Deep-Learning-Modelle wie z.B. neuronale Konvolutionsnetzwerke (CNNs).

In 105, erkennt oder erkennen der oder die Prozessoren 706 dann anhand des trainierten Modells 718, ein oder mehrere Objekte in dem Bild und lokalisiert dieselbe innerhalb des jeweiligen Bildes. Des Weiteren sucht oder suchen der oder die Prozessoren 706, in 105, Begrenzungsrahmen ("Bounding Boxes") oder Regionen in dem Bild, welche mit einer ausreichend großen Wahrscheinlichkeit Objekte enthalten.

In 106 ordnet oder ordnen der oder die Prozessoren 706 anhand des Modells 718 die erkannten Objekte verschiedenen (z.B. vordefinierten) Objektklassen. Beispiele für "relevante" Objektklassen sind z.B. Tisch, Fenster, Rahmen, Waschbecken, usw.

In 107 bearbeitet oder bearbeiten der oder die Prozessoren 706 die in 106 ermittelte Klassifizierung der Objekte nach. Dieses sogenanntes "Post-Processing" wird durchgeführt, um die Ergebnisse zu verfeinern und falsch positive Ergebnisse zu entfernen. Dabei können verschiedene Algorithmen, Verfahren und Techniken, wie z.B. die Nicht-Maxima Unterdrückung (non-maximum suppression, NMS) verwendet werden, um die zuverlässigsten Vorhersagen auszuwählen und redundante oder überlappende Begrenzungsrahmen zu verwerfen.

In 108 kann oder können der oder die Prozessoren 706 die ermittelten (und gegebenenfalls nachbearbeiteten) Objekte über die Ansicht des Benutzers 722 in einer AR Anwendung legen (z.B. falls das Smartgerät 702 eine Mixed-Reality-Brille ist) und beispielsweise dem Benutzer 722 des Smartgeräts 702 auf einer Anzeigevorrichtung 720 des Smartgeräts 702 ausgeben. Dies kann zum Beispiel das Hinzufügen von Beschriftungen, Anmerkungen oder 3D-Visualisierungen der ermittelten Objekte beinhalten.

Das Verfahren von Figur 1 ermöglicht es, Objekte in einem digitalen Bild zu erkennen, und dann mithilfe von AR dem Benutzer 722 Angaben zu den erkannten Objekten anzuzeigen.

Um Anomalien, Schäden und/oder Defekte in den erkannten Objekten zu identifizieren, kann eine Mehrzahl an digitalen Bildern nötig sein, welche die erkannten Objekte unter unterschiedlichen Winkeln und/oder bei unterschiedlichen Lichtverhältnissen zeigen und erfassen.

Um besser Anomalien, Schäden und/oder Defekte in den Objekten zu erkennen, können Datenströmen aus zusätzlichen Sensoren/Eingabegeräten mit den digitalen Bildern kombiniert werden.

Zum Beispiel können zusätzlich Infrarot-(IR)-Bildsensoren (Nahinfrarot-Erkennung), LiDAR-Sensoren, VOC-Erkennung, Geolokalisierung (GPS), Wetterdaten, Kapazitätssensoren für die Ermittlung der Objektporosität und/oder Tiefensensoren verwendet werden. Die Tiefensensoren können z.B. strukturierte Lichtsensoren sein, die es ermöglichen zusätzlich zum visuellen Bild Tiefeninformationen zu erfassen.

Des Weiteren können in der AR Anwendung auch verborgene Infrastrukturen wie Stromleitungen und Rohre dem Benutzer 722 angezeigt werden. Die dazu zusätzlich benötigten Informationen können z.B. über die Registrierung während eines Bauprozesses, über Erkennung durch spezialisierte Tools, oder durch optische Messmethoden erhalten und von dem oder den Prozessoren 706 ermittelt werden (z.B. wo sich Rohre usw. befinden sollten, basierend auf den Abständen von Strahlen oder dem Standort einer Steckdose).

Die Objekterkennung bzw. der Bilddatensatz kann weiter verfeinert werden, indem der Benutzer 722 aus einer (beispielsweise in dem Speicher 708 gespeicherten) Liste von vorgeschlagenen Oberflächen, Materialien, Farben, Mustern, Texturen, usw., mittels eines oder mehrerer (nicht dargestellten) Eingabegeräten (z.B. Tastatur, Spracherkennungseinrichtung, etc.) und mittels des einen oder der mehrere Prozessoren 706 auswählen kann. Dadurch können Ungenauigkeiten in den Daten (z.B. schlechte Beleuchtung, schwer erkennbare Objekte) durch Benutzereingaben ausgeglichen werden.

Um eine geeignete und detaillierte Reparaturmaßnahme und/oder ein geeignetes Haftmittel/Adhäsiv zur Objektreparatur vorzuschlagen, wird auf ein vorgefiltertes Bild (wie z.B. mit dem Verfahren von Figur 1) eine trainierte Künstliche Intelligenz (KI) bzw. das trainierte Modell 718, beispielsweise das trainierte Maschinen-Lern-Modell 718 zur Bildanalyse angewendet, um kritische Merkmale des Objekts zu unterscheiden.

Ein wichtiges Merkmal ist zum Beispiel die Oberflächenporosität eines erkannten Objekts, d.h. zu ermitteln, ob die Objektoberfläche poröser ist als erwartet (was auf eine nötige Reparatur hindeutet).

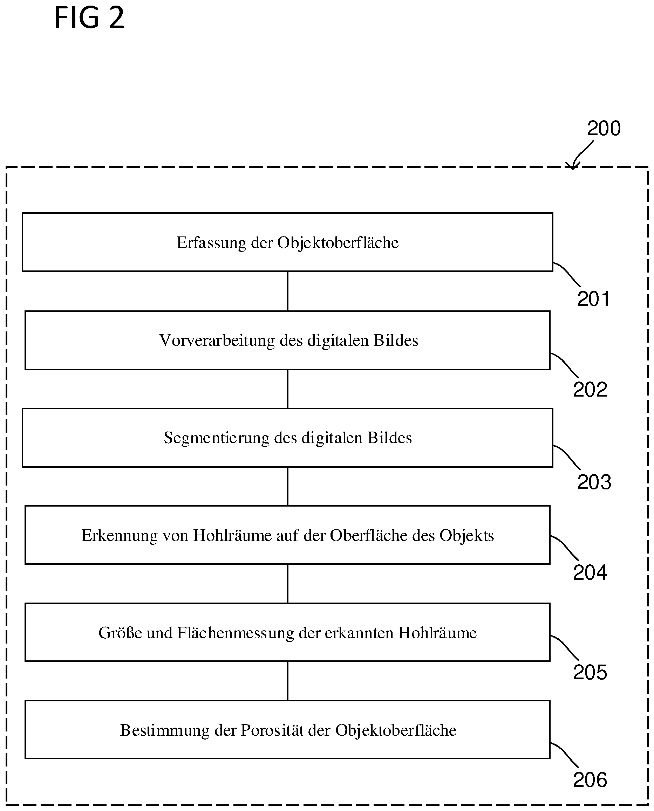

**Figur 2** zeigt ein Flussdiagramm 200, das ein (von dem oder den Prozessoren 706 durchgeführtes) Verfahren zum Ermitteln (Schätzen) der Oberflächenporosität eines (in einem gespeicherten digitalen Bild (z.B. der Folge von digitalen Bildern 714) erkannten) Objekts veranschaulicht.

Der Begriff "Porosität" bezieht sich im Rahmen dieser Beschreibung auf den prozentualen Anteil von Hohlräumen (Poren) in einem Objekt (Material) im Verhältnis zu seinem Gesamtvolumen.

In 201 wird die Oberfläche des in dem digitalen Bild befindlichen und erkannten Objekt erfasst. Beispielsweise werden das Objekt und seine Oberfläche in hoher Auflösung mittels der Kamera 704 erfasst, zum Beispiel in 4k-Auflösung oder in 8k-Auflösung.

In 202 wird das Bild vorverarbeitet, um die Qualität zu verbessern, Beleuchtungsschwankungen auszugleichen und um Rauschen zu reduzieren. Die Vorverarbeitung des Bildes ermöglicht später eine genauere Analyse des Objekts.

In 203 wird das digitale Bild mittels Bildsegmentierungstechniken segmentiert, um die interessierenden Oberflächenbereiche zu isolieren. Zum Beispiel kann die Oberfläche vom Hintergrund und anderen irrelevanten Teilen des Bildes getrennt werden.

Nachdem die Objektoberfläche in 203 segmentiert ist, werden in 204 Verfahren angewendet, um einzelne Hohlräume (Poren) auf der Oberfläche zu erkennen. Dies kann zum Beispiel die Erkennung von Kanten, lokalen Intensitätsschwankungen oder spezifischen Merkmalen im Zusammenhang mit Poren beinhalten.

Nach der Erkennung einzelner Hohlräume (Poren) werden in 205 ihre Größe und ihre Fläche gemessen. Dies kann zum Beispiel durch das Zählen von Pixeln eines als Hohlraum klassifizierten Objekts in dem digitalen Bild oder durch die Verwendung von Kalibrierungsinformationen zur Umwandlung von Pixelmessungen in physikalische Messungen erfolgen.

In 206 wird dann die Porosität der Objektoberfläche ermittelt, indem das Verhältnis zwischen der Gesamtfläche der Poren in dem jeweiligen Objekt und der Gesamtoberfläche des jeweiligen Objekts berechnet wird.

Die in verschiedenen Aspekten dieser Offenbarung verwendete Formel für die Porosität lautet:

$$\text{Porosität (\%)} = (\text{Gesamtporenfläche}/\text{Gesamtoberfläche}) * 100$$

Die Genauigkeit der ermittelten Oberflächenporosität hängt von der Qualität der Bilder, der Segmentierungs- und Porenerkennungsverfahren, sowie von Unregelmäßigkeiten oder Rauschen auf der Oberfläche des erkannten Objekts in dem jeweiligen Bild ab.

Für die Oberflächensegmentierung und Porenerkennung können Techniken des maschinellen Lernens eingesetzt werden, insbesondere wenn es sich um komplexe Oberflächen oder einen großen Datensatz an digitalen Bildern, die zum Trainieren des Modells 718 verwendet werden, handelt.

Durch das Trainieren des Modells 718, beispielsweise des Maschinen-Lern-Modells 718 auf markierten Daten kann das Modell lernen, Oberflächenmerkmale automatisch zu erkennen und zu segmentieren, wodurch der Prozess effizienter und genauer wird.

Ein Beispiel für ein solches Trainingsverfahren ist es Trainingsdatensätze mit hochporösen Materialien, z.B. extrudiertes Polystyrol (XPS) oder Porenbeton, mittelporösen Materialien, z.B. unbehandeltes Holz, und gering porösen Materialien, z.B. keramisch glasierte Fliesen, Metalle, Polyvinylchlorid (PVC), Polyethylen (PE), zu verwenden.

Die Porosität eines Objekts ist aber nur eine von vielen möglichen Merkmale um Anomalien, Schäden oder Defekte für erkannte Objekte zu identifizieren.

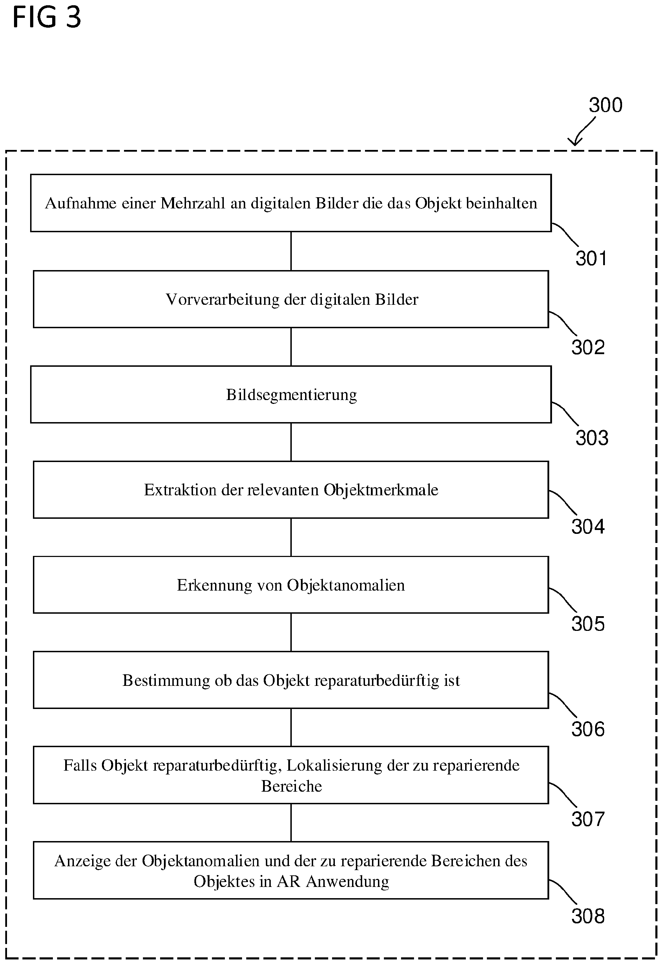

**Figur 3** zeigt ein Flussdiagramm 300, das ein (allgemeines) (von dem oder den Prozessoren 706 durchgeführtes) Verfahren veranschaulicht um sichtbare Schäden, Defekte oder Anomalien eines Objekts zu identifizieren.

In 301 werden digitale Bilder des Objekts aus verschiedenen Blickwinkeln und bei unterschiedlichen Lichtverhältnissen aufgenommen. Die Bilder können mit einer oder mehreren Kameras (z.B. Kamera 704) (z.B. von einem Smartgerät, beispielsweise von dem Smartgerät 702) oder Sensoren aufgenommen werden, die für das zu untersuchende Objekt geeignet sind, insbesondere durch die Kombination von Bild-, Tiefen-, IR- und/oder LIDAR-Daten.

In 302 werden die Bilder vorverarbeitet, um ihre Qualität zu verbessern, z.B. um Beleuchtungsschwankungen auszugleichen und/oder um Rauschen zu reduzieren. Verfahren zur Vorverarbeitung können z.B. Größenanpassung, Normalisierung, Rauschunterdrückung, Farbkorrektur und Kontrastanpassung umfassen.

In 303 erfolgt mittels eines Bildsegmentierungsverfahrens eine Segmentierung, um das Objekt vom Hintergrund oder anderen irrelevanten Teilen des digitalen Bildes zu trennen. Die Segmentierung ermöglicht es, die interessanten Bereiche eines Objektes zu isolieren.

In 304 werden die relevanten Merkmale eines Objekts extrahiert, wobei die Merkmale auf die Notwendigkeit einer Reparatur hinweisen. Zu diesen Merkmalen können z.B. Anomalien in der erwarteten Geometrie, Risse, Kratzer, Verfärbungen, Verformungen oder andere sichtbare Defekte gehören.

In 305 werden die Anomalien in dem Bild bzw. Objekt erkannt. Dazu werden Verfahren zur Erkennung einer Anomalie angewendet, um einen oder mehrere Bereiche in dem jeweiligen digitalen Bild zu identifizieren, die erheblich von normalen (gesunden), beispielsweise vorgegebenen, gespeicherten Bedingungen abweichen. In 305 können die extrahierten Merkmale mit einer Basislinie verglichen werden, wie ein normales, unbeschädigtes Objekt aussehen sollte.

In 306 werden Schwellenwerte zur Anomalie-Bewertung festgelegt. Danach wird ermittelt, ob ein Objekt reparaturbedürftig ist oder nicht. Übersteigt die Anomalie-Bewertung einen bestimmten vordefinierten Wert (Schwellenwert), bedeutet dies, dass das Objekt einen oder mehrere erhebliche Schäden oder einen oder mehrere Mängel aufweist und repariert werden sollte.

Falls in 306 ein Objekt als reparaturbedürftig eingestuft wurde, werden in 307 Bildverarbeitungsverfahren eingesetzt, um die genauen Bereiche zu lokalisieren, die Aufmerksamkeit erfordern bzw. repariert werden müssen. Die in 307 genauere Lokalisierung der zu reparierenden Bereiche ermöglicht einen effizienteren Reparaturprozess.

In 308 werden die in 306 erkannten Anomalien und die in 307 lokalisierten zu reparierende Bereichen für den Benutzer 722 auf ein angereichtes Bild (AR) hervorgehoben oder mit Anmerkungen versehen.

Beispielsweise werden auf Deep-Learning basierende Verfahren, wie z.B. Verfahren unter Verwendung von Konvolutionsnetzwerken (CNNs), zur Automatisierung der Merkmalsextraktion in 304 und zur Anomalie-Erkennung in 305 eingesetzt, insbesondere bei komplexen Mustern und großen Datensätzen.

Nach der Identifizierung von Anomalien mit dem Verfahren von Figur 3 können z.B. visuelle Berichte für die menschliche Inspektion oder weitere Analysen für den Benutzer 722 erstellt werden.

Im Folgenden wird eine beispielhafte Defektbildanalyse (Anomalie-Analyse) näher erläutert.

Im Folgenden wird, um eine geeignete Reparaturmaßnahme und/oder ein geeignetes Haftmittel (Adhäsiv) für ein Objekt zu identifizieren, ein vorgefiltertes (vorverarbeitetes) digitales Bild (beispielsweise der Folge von digitalen Bildern 714) mithilfe einer trainierten KI zur Bildanalyse in kritische Merkmale/Bereiche unterschieden, wie in den Verfahren von Figur 1, Figur 2 und Figur 3 ausführlich erläutert.

Für die (optische) Frakturkohärenz eines (Primär-)Objektes wird zwischen Riss und Bruch unterschieden. Ein Riss ist gekennzeichnet durch einen zusammenhängenden Bereich des Primärobjektes ohne erkennbare Unterbrechung von Farbe oder Textur, d.h. ein Riss tritt auf als begrenzte Werkstofftrennung innerhalb des Primärobjektes. Ein Bruch ist gekennzeichnet durch mehrere Teile gleicher Farbe, Textur, mit einer oder mehreren größeren Unterbrechungen durch Bereiche deutlich anderer Farbe und Textur (z.B. solches des Bildhintergrundes).

Beim Riss wird folgendes ermittelt und berücksichtigt:

### i) Rissausdehnung:

Die Rissausdehnung wird optisch ermittelt. Optional erfolgt zusätzlich eine unterstützende manuelle Eingabe durch den Benutzer.

Die Ausdehnung eines Risses wird in folgende Klassen unterteilt (als Abstand der Unterbrechung des Objektes):

Breite des Risses:

- Haarriss: 0.2 bis 0.5 mm;
- Haarriss: 0.5 bis 1.5 mm;
- Riss: 1,5 bis 4,0 mm;
- Riss: 4 bis 5 mm;
- Riss: Mehr als 5 mm.

Tiefe des Risses:

- Haarriss kleiner als 1 cm;
- Riss: 1 bis 10 cm;
- Riss: Größer als 10 cm.

Die Länge des Risses kann optional ebenfalls erfasst werden.

### ii) Ermittlung des Materials:

Das Material, die Materialdichte und/oder die Elastizität des Materials des (Primär-)Objektes (bzw. der Stelle der Anomalie) wird mithilfe der Bilddatenbank der trainierten KI ermittelt.

Optional kann eine unterstützende manuelle Eingabe durch den Benutzer (z.B. Benutzer 722 des Smartgeräts 702) erfolgen.

### iii) Ermittlung der Porosität:

Die Porosität des (Primär-)Objektes bzw. seiner Oberfläche und/oder eines Teils seiner Oberfläche wird z.B. durch das Verfahren von Figur 2 ermittelt (und/oder durch eine Bild/Materialdatenbank) .

Optional kann zusätzlich eine Porosität-Messung erfolgen und/oder eine manuelle Eingabe des Benutzers zur Porosität vorliegen.

Danach wird entschieden ob Porosität vorliegt oder nicht (ja/nein Entscheidung), z.B. wird das Objekt als porös eingestuft falls seine ermittelte Porosität unter einen vorher definierten Basiswert (Schwellenwert) liegt.

Bei einem Bruch im Primärobjekt wird folgendes ermittelt und berücksichtigt:

### i) Frakturerkennung und Frakturabmessung:

Die Fraktur (Bruchlinien) wird optisch erkannt und gemessen.

Optional kann eine unterstützende manuelle Eingabe durch den Benutzer erfolgen.

Die Konturen werden erkannt und die Anzahl der Einzelbruchstücke ermittelt.

Konturanalyse der Passgenauigkeit der Bruchkanten:

- mehr 95 % Übereinstimmung: "Klasse S";
- mehr als 85 % Übereinstimmung: "Klasse A";
- mehr als 75% Übereinstimmung: "Klasse B";
- weniger als 75% Übereinstimmung: "kein Bruch detektierbar".

### ii) Länge der Bruchkante im Verhältnis zur Länge des Gesamtobjektes:

Die Gesamtkantenlängen der Bruchstücke wird optisch bestimmt, sowie das Verhältnis der Kantenlänge des Bruches zu der Kantenlänge der intakten Grenzflächen.

### iii) Ermittlung des Materials:

Das Material, die Materialdichte und/oder die Elastizität des Materials des (Primär-)Objektes wird mithilfe der Bilddatenbank der trainierten KI ermittelt.

Optional kann eine unterstützende manuelle Eingabe durch den Benutzer erfolgen.

### iv) Ermittlung der Porosität:

Die Porosität des (Primär-)Objektes bzw. seiner Oberfläche und/oder eines Teils seiner Oberfläche wird z.B. durch das Verfahren von Figur 2 ermittelt (und/oder durch eine Bild/Materialdatenbank).

Optional kann zusätzlich eine Porosität-Messung erfolgen und/oder eine manuelle Eingabe des Benutzers zur Porosität vorliegen.

Danach wird entschieden ob Porosität vorliegt oder nicht (ja/nein Entscheidung), z.B. wird das Objekt als porös bestimmt falls seine ermittelte Porosität unter einen vorher definierten Basiswert (und/oder Schwellenwert) liegt.

### v) Vorliegen von Verunreinigung:

Es wird optisch (z.B. durch Reflektion, Glanz, unregelmäßige Textur oder Farbe) bestimmt ob Verunreinigungen am Primärobjekt vorliegen, z.B. durch alten Klebstoff, Schimmel oder Schmutz.

Im Folgenden werden zwei mögliche Verfahren (Ablaufschemas) beim vorliegend eines Risses und beim vorliegend einer Fraktur in einem Primärobjekt erläutert.

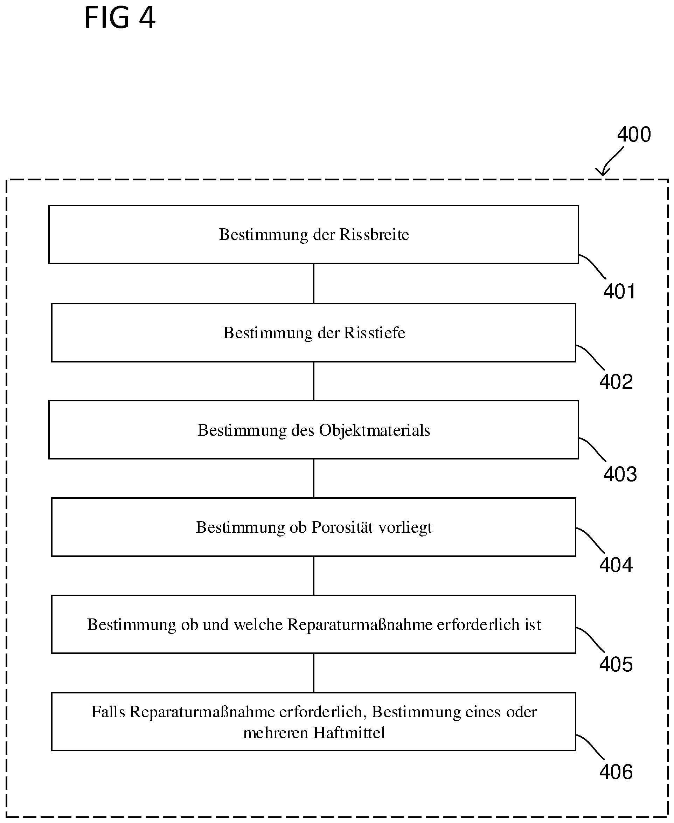

**Figur 4** zeigt ein Flussdiagramm 400, das ein (von dem oder den Prozessoren 706 durchgeführtes) Verfahren gemäß einer Ausführungsform zur Bestimmung einer erforderlichen Reparaturmaßnahme bei einem Riss veranschaulicht.

Nach dem erfolgten Ermitteln einer erforderlichen Reparaturmaßnahme kann oder können ein oder mehrere im Rahmen der ermittelten Reparaturmaßnahme einzusetzende Haftmittel ermittelt werden (aus einem Satz vorgegebener (und beispielsweise in dem Speicher 708 gespeicherten Haftmittel (in Figur 7 nicht dargestellt).

Nachdem ein Riss im Primärobjekt festgestellt worden ist, z.B. mit dem Verfahren von Figur 3, kann mithilfe der oben erläuterten Defektbildanalyse, folgendermaßen ermittelt werden, ob und welche Reparaturmaßnahme für das Objekt erforderlich ist:

In 401 wird die Breite des Risses ermittelt.

In 402 wird die Tiefe des Risses ermittelt.

In 403 wird das Material des Objekts ermittelt/bestimmt (und/oder die Objektoberfläche und/oder die Stelle des Risses). Zum Beispiel kann das Objektmaterial Holz, Putz, Keramik, Glas, Stein, Kunststoff, usw., sein.

In 404 wird ermittelt ob Porosität vorliegt (ja/nein Entscheidung), zum Beispiel mit Hilfe des Verfahrens von Figur 2.

In 405 wird dann auf Basis der in 401, 402, 403 und 404 ermittelten Riss-Merkmale bestimmt ob und welche Reparaturmaßnahme für den Riss erforderlich ist.

Beispiele für mögliche Reparaturmaßnahmen sind:

- Verspachteln der Defektstelle,
- Überstreichen,
- Zusammenkleben,
- (passgenaues) Zusammenfügen (und für eine gewisse Zeit halten).

Nach dem erfolgten Ermitteln der notwendigen Reparaturmaßnahme wird in 406, in Abhängigkeit von der in 405 ermittelten Reparaturmaßnahme, ein oder mehrere Haftmittel aus einer Reihe vorgegebener (und gespeicherter) Haftmittel/Kleber, als zu verwendendes Haftmittel ermittelt und dem Benutzer 722 empfohlen (beispielsweise mittels der Anzeigevorrichtung 720).

Beispiele für empfohlene (mögliche) Haftmittel sind:

- chemisch härtende Haftmittel, z.B. Cyanacrylate, Methylmethacrylate, Epoxid, Silikone, Polyimide, usw., und/oder

- physikalisch abbindende Haftmittel, z.B. lösemittelhaltige Nassklebstoffe, Diffusionsklebstoffe, Kontaktklebstoffe, wasserbasierte Dispersionsklebstoffe, Schmelzklebstoffe, Plastisole, usw.

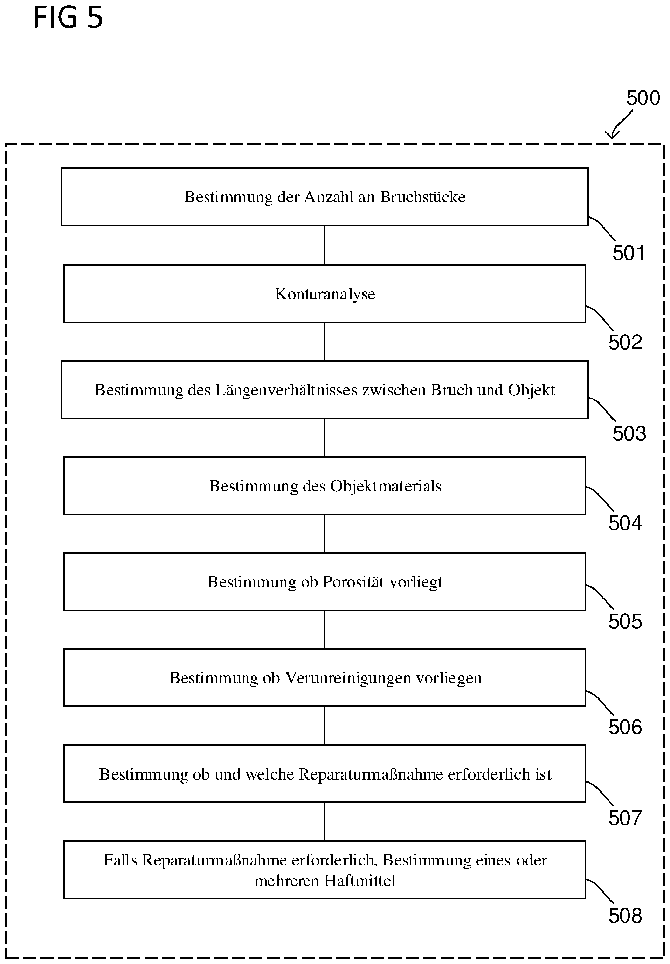

**Figur 5** zeigt ein Flussdiagramm 500, das ein (von dem oder den Prozessoren 706 durchgeführtes) Verfahren gemäß einer Ausführungsform zur Bestimmung einer erforderlichen Reparaturmaßnahme bei einer Fraktur (Bruch) veranschaulicht.

Nach dem erfolgten Ermitteln der erforderlichen Reparaturmaßnahme werden ein oder mehrere im Rahmen der ermittelten Reparaturmaßnahme einzusetzende Haftmittel ermittelt und dem Benutzer vorgeschlagen (aus einem Satz vorgegebener Haftmittel).

Nachdem eine Fraktur (Bruch) im Primärobjekt festgestellt worden ist, z.B. mit dem Verfahren von Figur 3, kann mithilfe der oben erläuterten Defektbildanalyse, folgendermaßen ermittelt werden, ob und welche Reparaturmaßnahme für das Objekt erforderlich ist:

In 501 wird die Anzahl an Bruchstücke ermittelt.

In 502 wird mithilfe einer Konturanalyse die Passgenauigkeit der Bruchkanten ermittelt und in verschiedene Klassen unterteilt.

Zum Beispiel wird der Bruch bei mehr als 95% Übereinstimmung der Passgenauigkeit der Kontur in "Klasse S" unterteilt, bei mehr als 85% Übereinstimmung (und weniger als 95%) in "Klasse A", bei mehr als 75% Übereinstimmung (und weniger als 85%) in "Klasse B", und bei weniger als 75% Übereinstimmung wird der Bruch als "nicht detektierbar" eingestuft.

In 503 wird das Längenverhältnis zwischen Bruch und (Primär-)Objekt ermittelt.

Die Gesamtkantenlängen der Bruchstücke wird optisch bestimmt, sowie das Verhältnis der Kantenlänge des Bruches zu der Kantenlänge der intakten Grenzflächen.

Zum Beispiel wird das Verhältnis unterteilt (unterschieden) in Bruch größer als Objekt, Bruch gleich lang wie Objekt, Bruch kleiner als Objekt, und/oder in feinere Zwischenabstufungen unterteilt.

Optional wird auch (nicht in Figur 5 gezeigt) die maximale örtliche Hebelkraft auf der Grenzfläche ermittelt (in $N/mm^2$), und in verschieden Klassen unterteilt, z.B. kleiner als 1 $N/mm^2$, zwischen 1 und 3 $N/mm^2$, zwischen 4 und 10 $N/mm^2$, zwischen 10 und 20 $N/mm^2$ und größer als 20 $N/mm^2$.

In 504 wird das Material des Objekts bestimmt (und/oder das Material der Objektoberfläche und/oder der Stelle des Bruchs). Zum Beispiel kann das Objektmaterial Holz, Putz, Keramik, Glas, Stein, Kunststoff, usw., sein.

In 505 wird ermittelt ob Porosität vorliegt (ja/nein Entscheidung), zum Beispiel mit Hilfe des Verfahrens von Figur 2.

In 506 wird (optisch, z.B. durch Reflektion, Glanz, unregelmäßige Textur oder Farbe) ermittelt, ob Verunreinigungen am Primärobjekt vorliegen, z.B. durch alten Klebstoff, Schimmel oder Schmutz.

In 507 wird auf Basis der in 501, 502, 503, 504, 505 und 506 ermittelten Bruch-Merkmale ermittelt, welche Reparaturmaßnahme für die Fraktur erforderlich ist.

Beispiele für mögliche Reparaturmaßnahmen sind:

- Verspachteln der Defektstelle,
- Überstreichen,
- Ausschäumen (bis Material aus Bruch herausragt),
- Zusammenkleben,
- (passgenaues) Zusammenfügen (und für eine gewisse Zeit halten),
- fehlendes Materialvolumen händisch nachmodellieren.

In 508 wird oder werden, in Abhängigkeit von der in 507 ermittelten Reparaturmaßnahme, ein oder mehrere Haftmittel aus einer Reihe vorgegebener (und gespeicherter) Haftmittel als zu verwendendes Haftmittel ermittelt und dem Benutzer 722 empfohlen bzw. vorgeschlagen (beispielsweise, indem das zu verwendende Haftmittel auf der Anzeigevorrichtung 720 angezeigt wird).

Des Weiteren können die in den Verfahren von Figur 4 und Figur 5 empfohlenen Reparaturmaßnahmen mehrere Schritte umfassen, z.B. für einen ersten Bruch fehlendes Materialvolumen nachmodellieren, 24 Stunden aushärten lassen, am nächsten Tag das gleiche für einen zweiten Bruch wiederholen, usw.

Optional können in den Verfahren von Figur 4 und Figur 5 dem Benutzer auf ein Smartgerät die zu erledigenden Aufgaben/Reparaturen angezeigt werden, sowie detaillierte Schritt-für-Schritt Anleitungen für die Reparaturen, wobei die einzelnen Anleitungsschritte mithilfe von AR für den Benutzer 722 visualisiert werden können.

Optional kann die ermittelte Reparaturmaßnahme unter Verwendung des ermittelten Haftmittels durchgeführt werden, z.B. unter Einsatz von Augmented Reality.

Dabei kann die vorgeschlagene Reparatur und/oder Reparaturanleitung auch auf der Grundlage von benutzerdefinierten Filtereinstellungen abweichen, wie z.B. die verfügbare Zeit, verfügbares Budget, Qualifikationsniveau des Benutzers, regionale Unterschiede, Luftfeuchtigkeit, geografischer Standort, Wettervorhersage, usw.

Optional können in den Verfahren von Figur 4 und Figur 5 dem Benutzer 722 das gesamte Projekt/Design bzw. die komplette Reparaturmaßnahme in AR angezeigt werden, einschließlich Produktempfehlungen ("Einkaufsliste"). Optional kann dieser Output auch als digitales Dokument bereitgestellt werden, z.B. in einem standardisierten Datenformat, das einem Fachmann übergeben wird, einschließlich technisch relevanter Daten für den Fachmann (Abmessungen, Materialien, usw.).

Optional können in den Verfahren von Figur 4 und Figur 5 dem Benutzer 722 auch angezeigt werden, wie ihr Haus/ihre Wohnung/ihr Garten nach Abschluss eines bestimmten Projekts/Reparatur aussehen könnte, auch wenn zunächst nur eine Freifläche vorhanden ist (z. B. Garten, Wohnzimmer, Terrasse, zusätzliche Wände, usw.).

Die Anzeige des Aussehens der Umgebung nach Anwendung der obigen Verfahren zur Identifizierung von Anomalien/Defekten/zu reparierenden Bereichen ist in einer AR-Umgebung implementiert.

Des Weiteren können geeignete Haftmittel dem Benutzer nicht nur empfohlen werden, sondern es kann auch angezeigt werden wo die benötigten Haftmittel gekauft werden können.

Außerdem kann ein gemeinsamer Zugriff auf die (AR-)Anwendung die Zusammenarbeit zwischen Do-it-Yourself, DIY, Heimwerker und Fachmänner erleichtern und fördern.

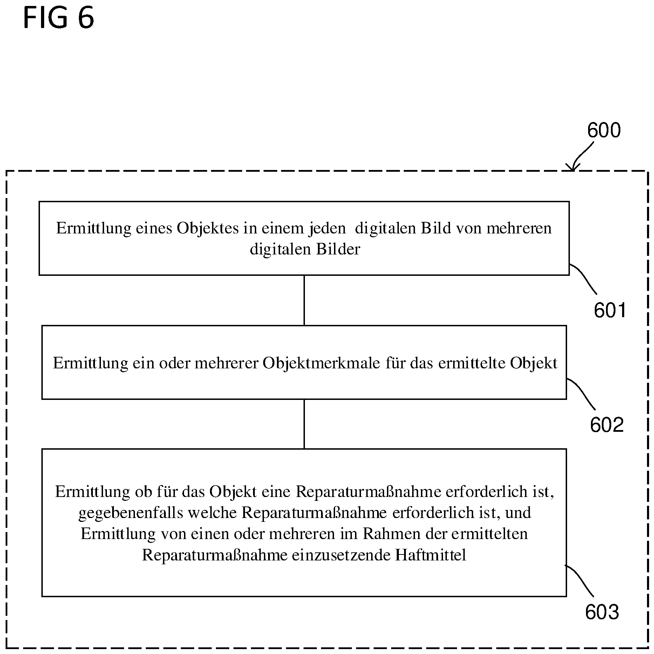

Zusammenfassend wird gemäß verschiedenen Ausführungsformen ein Verfahren bereitgestellt, wie es in Figur 6 dargestellt ist.

**Figur 6** zeigt ein Flussdiagramm, das ein (von dem oder den Prozessoren 706 durchgeführtes) Verfahren zur Bildverarbeitung gemäß einer Ausführungsform veranschaulicht.

In 601 wird ein Objekt ermittelt, in einem jeden digitalen Bild von mehreren digitalen Bildern, die das Objekt enthalten, wobei die mehreren digitalen Bilder das Objekt unter unterschiedlichen Winkeln und/oder bei unterschiedlichen Lichtverhältnissen erfassen.

In 602 werden ein oder mehrere Merkmale für das ermittelte Objekt ermittelt.

In 603 wird ermittelt, unter Verwendung des oder der ermittelten einem oder mehreren Merkmale und mittels eines Maschinen-Lern-Modells, ob für das Objekt eine Reparaturmaßnahme erforderlich ist und gegebenenfalls welche Reparaturmaßnahme erforderlich ist, wobei für die ermittelte Reparaturmaßnahme zusätzlich ein oder mehrere im Rahmen der ermittelten Reparaturmaßnahme einzusetzende Haftmittel aus einem Satz mehrerer vorgegebener und gespeicherter Haftmittel ermittelt werden.

Gemäß verschiedenen Ausführungsbeispielen wird in anderen Worten ein Verfahren bereitgestellt, dass mittels eines Maschinen-Lern-Modells für einen auf einen oder mehreren digitalen Bildern befindlichen Objekt relevante Merkmale ermittelt, und dann auf der Basis der ermittelten Merkmale entscheidet ob für das Objekt eine Reparaturmaßnahme erforderlich ist und gegebenenfalls welche Reparaturmaßnahme erforderlich ist. Zusätzlich zur Reparaturmaßnahme werden auch ein oder mehrere für die Reparatur geeignete Haftmittel ermittelt und beispielsweise dem Benutzer 722 empfohlen.

Optional wird die Reparaturmaßnahme sowie die dazu benötigten Haftmittel unter Einsatz von Augmented Reality dem Benutzer 722 angezeigt, der dann die Reparatur des Objekts durchführen kann.

**Patentansprüche**

1. Verfahren zur Bildverarbeitung, aufweisend:

   • Ermitteln eines Objekts in einem jeden digitalen Bild von mehreren digitalen Bildern, die das Objekt enthalten;
   • Ermitteln von einem oder mehreren Merkmalen für das ermittelte Objekt;
   • Ermitteln, unter Verwendung des oder der ermittelten einem oder mehreren Merkmale und mittels eines Modells, ob für das Objekt eine Reparaturmaßnahme erforderlich ist und gegebenenfalls welche Reparaturmaßnahme erforderlich ist, wobei für die ermittelte Reparaturmaßnahme zusätzlich ein oder mehrere im Rahmen der ermittelten Reparaturmaßnahme einzusetzende Haftmittel aus einem Satz mehrerer vorgegebener und gespeicherter Haftmittel ermittelt werden.

2. Verfahren gemäß Anspruch 1, ferner aufweisend:
   Erfassen von mehreren digitalen Bildern, die das Objekt enthalten, wobei die mehreren digitalen Bilder das Objekt unter unterschiedlichen Winkeln und/oder bei unterschiedlichen Lichtverhältnissen erfassen.

3. Verfahren gemäß Anspruch 1 oder 2,
   wobei das Ermitteln, ob für das Objekt eine Reparaturmaßnahme erforderlich ist und gegebenenfalls welche Reparaturmaßnahme erforderlich ist, mittels eines Maschinen-Lern-Modells erfolgt.

4. Verfahren gemäß Anspruch 1 bis 3,
   wobei das oder die ermittelten Merkmale für das ermittelte Objekt mindestens eines der folgenden Merkmale aufweisen oder daraus bestehen:

   • eine oder mehrere Bruchlinien;
   • ein oder mehrere Materialien, aus denen das Objekt gebildet ist;
   • ein oder mehrere Bruchstücke des ermittelten Objekts;
   • eine Oberflächencharakterisierung von zumindest einem Teil einer Oberfläche des ermittelten Objekts oder Teils des ermittelten Objekts.

5. Verfahren gemäß einem der Ansprüche 1 bis 4,
   wobei für die ermittelte Reparaturmaßnahme eine Anleitung zum Durchführen der Reparaturmaßnahme ermittelt wird.

6. Verfahren gemäß einem der Ansprüche 1 bis 5,
   wobei die ermittelte Reparaturmaßnahme ein Zusammenfügen eines oder mehrerer Teile des Objekts mittels eines stoffschlüssigen Fügeverfahrens aufweist.

7. Verfahren gemäß einem der Ansprüche 1 bis 6,
wobei die ermittelte Reparaturmaßnahme ein Zusammenfügen eines oder mehrerer Teile des Objekts mittels Klebens aufweist.

8. Verfahren gemäß einem der Ansprüche 1 bis 7,
wobei das eine oder die mehreren im Rahmen der ermittelten Reparaturmaßnahme einzusetzende Haftmittel einen oder mehrere Klebstoffe aufweisen.

9. Verfahren gemäß einem der Ansprüche 1 bis 8, ferner aufweisend:
Durchführen der Reparaturmaßnahme unter Verwendung des ermittelten Haftmittels.

10. Verfahren gemäß Anspruch 9,
wobei die Reparaturmaßnahme unter Einsatz von Augmented Reality durchgeführt wird.

11. Computerlesbares Speichermedium, in dem Instruktionen gespeichert sind, die, wenn sie von einem Prozessor ausgeführt werden, ein Verfahren gemäß einem der Ansprüche 1 bis 10 implementieren.

# FIG 1

100

| Aufnahme eines digitalen Bildes mit einer Kamera eines Smartgeräts |
101

| Vorverarbeitung des digitalen Bildes |
102

| Extraktion der relevanten Objektmerkmale |
103

| Training des Maschinen-Lern-Modells |
104

| Erkennung und Lokalisierung von Objekten, anhand des Maschinen-Lern-Modells |
105

| Zuordnung der erkannten Objekte zu Objektklassen |
106

| Nachbearbeitung der erkannten Objekte |
107

| Anzeige der annotierten Objekte in AR Anwendung |
108

# FIG 2

200

| Erfassung der Objektoberfläche |

201

| Vorverarbeitung des digitalen Bildes |

202

| Segmentierung des digitalen Bildes |

203

| Erkennung von Hohlräume auf der Oberfläche des Objekts |

204

| Größe und Flächenmessung der erkannten Hohlräume |

205

| Bestimmung der Porosität der Objektoberfläche |

206

# FIG 3

300

| Aufnahme einer Mehrzahl an digitalen Bilder die das Objekt beinhalten |

301

| Vorverarbeitung der digitalen Bilder |

302

| Bildsegmentierung |

303

| Extraktion der relevanten Objektmerkmale |

304

| Erkennung von Objektanomalien |

305

| Bestimmung ob das Objekt reparaturbedürftig ist |

306

| Falls Objekt reparaturbedürftig, Lokalisierung der zu reparierende Bereiche |

307

| Anzeige der Objektanomalien und der zu reparierende Bereichen des Objektes in AR Anwendung |

308

# FIG 4

400

| Bestimmung der Rissbreite | 401 |
| Bestimmung der Risstiefe | 402 |
| Bestimmung des Objektmaterials | 403 |
| Bestimmung ob Porosität vorliegt | 404 |
| Bestimmung ob und welche Reparaturmaßnahme erforderlich ist | 405 |
| Falls Reparaturmaßnahme erforderlich, Bestimmung eines oder mehreren Haftmittel | 406 |

# FIG 5

500

```
┌─────────────────────────────────────────────────────────┐
│  ┌─────────────────────────────────────────────────┐    │
│  │      Bestimmung der Anzahl an Bruchstücke       │    │
│  └─────────────────────────────────────────────────┘    │
│                                                    501   │
│  ┌─────────────────────────────────────────────────┐    │
│  │                 Konturanalyse                   │    │
│  └─────────────────────────────────────────────────┘    │
│                                                    502   │
│  ┌─────────────────────────────────────────────────┐    │
│  │ Bestimmung des Längenverhältnisses zwischen     │    │
│  │              Bruch und Objekt                   │    │
│  └─────────────────────────────────────────────────┘    │
│                                                    503   │
│  ┌─────────────────────────────────────────────────┐    │
│  │        Bestimmung des Objektmaterials           │    │
│  └─────────────────────────────────────────────────┘    │
│                                                    504   │
│  ┌─────────────────────────────────────────────────┐    │
│  │        Bestimmung ob Porosität vorliegt         │    │
│  └─────────────────────────────────────────────────┘    │
│                                                    505   │
│  ┌─────────────────────────────────────────────────┐    │
│  │   Bestimmung ob Verunreinigungen vorliegen      │    │
│  └─────────────────────────────────────────────────┘    │
│                                                    506   │
│  ┌─────────────────────────────────────────────────┐    │
│  │ Bestimmung ob und welche Reparaturmaßnahme      │    │
│  │              erforderlich ist                   │    │
│  └─────────────────────────────────────────────────┘    │
│                                                    507   │
│  ┌─────────────────────────────────────────────────┐    │
│  │ Falls Reparaturmaßnahme erforderlich,           │    │
│  │ Bestimmung eines oder mehreren Haftmittel       │    │
│  └─────────────────────────────────────────────────┘    │
│                                                    508   │
└─────────────────────────────────────────────────────────┘
```

# FIG 6

600

Ermittlung eines Objektes in einem jeden digitalen Bild von mehreren digitalen Bilder

601

Ermittlung ein oder mehrerer Objektmerkmale für das ermittelte Objekt

602

Ermittlung ob für das Objekt eine Reparaturmaßnahme erforderlich ist, gegebenenfalls welche Reparaturmaßnahme erforderlich ist, und Ermittlung von einen oder mehreren im Rahmen der ermittelten Reparaturmaßnahme einzusetzende Haftmittel

603

FIG 7

Europäisches
Patentamt

European
Patent Office

Office européen
des brevets

# EUROPÄISCHER RECHERCHENBERICHT

**Nummer der Anmeldung**

EP 24 16 3663

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2024/071010 A1 (BRENT ROGER [US] ET AL) 29. Februar 2024 (2024-02-29) * Zusammenfassung * * Absätze [0002], [0006], [0043], [0045], [0088] * ----- | 1-11 | INV. G06T7/00 |
| X | CUMBAJIN ESTEBAN ET AL: "A Systematic Review on Deep Learning with CNNs Applied to Surface Defect Detection", INOV INESC INOVAÇÃO, INSTITUTE OF NEW TECHNOLOGIES, LEIRIA OFFICE, 2411-901 LEIRIA, PORTUGAL, Bd. 9, Nr. 10, 25. September 2023 (2023-09-25), Seite 193, XP093099369, DOI: 10.3390/jimaging9100193 | 1-4,6-9, 11 | |
| A | * Zusammenfassung * * Abschnitte "1. Introduction", "3.2.2. Building", "3.2.4. Wood" * ----- | 5,10 | |

**RECHERCHIERTE SACHGEBIETE (IPC)**

G06T

Der vorliegende Recherchenbericht wurde für alle Patentansprüche erstellt

| Recherchenort | Abschlußdatum der Recherche | Prüfer |
|---|---|---|
| München | 17. Juli 2024 | Eckert, Lars |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 16 3663

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2024

| Im Recherchenbericht angeführtes Patentdokument | Datum der Veröffentlichung | Mitglied(er) der Patentfamilie | Datum der Veröffentlichung |
|---|---|---|---|
| US 2024071010 A1 | 29-02-2024 | KEINE | |

EPO FORM P0461

Für nähere Einzelheiten zu diesem Anhang : siehe Amtsblatt des Europäischen Patentamts, Nr.12/82